# EUROPÄISCHE PATENTSCHRIFT

(11) **EP 0 554 524 B1**
(45) Veröffentlichungstag und Bekanntmachung des Hinweises auf die Patenterteilung: **11.10.1995**
(21) Anmeldenummer: 92119085.6
(22) Anmeldetag: 06.11.1992
(51) Int. Cl.: B31B 1/90, B31B 19/74

(54) **Verfahren zur Herstellung von Beuteln und Vorrichtung zum Durchführen dieses Verfahrens**
Process for producing bags and apparatus for carrying out this process
Procédé pour la fabrication de sacs et dispositif pour éxécuter ce procédé

(30) Priorität: 16.12.1991 DE 4141466
(43) Veröffentlichungstag der Anmeldung: 11.08.1993
(73) Patentinhaber: Windmöller & Hölscher, D-49525 Lengerich (DE)
(72) Erfinder: Achelpohl, Fritz, Ing. grad., W-4543 Lienen (DE); Mundus, Friedhelm, Dipl.-Ing., W-4540 Lengerich (DE); Voss, Hans-Ludwig, Dipl.-Ing., W-4542 Tecklenburg 2 (DE)
(74) Vertreter: Laufhütte, Dieter, Dr.-Ing.

(56) Entgegenhaltungen:
- EP-A- 0 014 858
- BE-A- 821 134
- DE-B- 1 128 355
- GB-A- 734 910
- US-A- 2 739 512

## Beschreibung

Die Erfindung betrifft ein Verfahren zur Herstellung von vorzugsweise mit Seitenfalten versehenen Beutein oder anderen flachen Werkstücken, die einen über deren Begrenzung überstehenden Zettel aufweisen.

Derartige Beutel sind grundsätzlich aus der europäischen Patentanmeldung 347 522 bekannt. Die dort bereits vorbeschriebenen Verpackungsbeutel aus abgelängtem Folienschlauch sind zum Befüllen einseitig offen hergestellt. Im Bereich des offenen Endes ist ein gegebenenfalls entfernbarer Zettel bzw. eine Folien-Fahne angeordnet, die mit einer Beutel-Flachseite im Bereich des offenen Endes des Beutels verbunden ist. Der Zettel bzw. die Fahne weist zwei Stapellöcher auf, über die der Beutel auf Stapelstifte einer Stapelstation abgelegt werden kann.

Ein Verfahren und eine Vorrichtung zur Herstellung von Werkstücken mit überstehenden Zetteln ist aus der US-A-2 739 512 bekannt.

Aufgabe der vorliegenden Erfindung ist es ein weiteres Verfahren zur Herstellung der zuvor genannten Beutel und eine Vorrichtung zum Durchführen dieses Verfahrens an die Hand zu geben.

Erfindungsgemäß weist ein Verfahren zur Herstellung der vorbeschriebenen Beutel folgende Schritte auf:
a) teilweise vorgefertigte Beutel bzw. flache Werkstücke werden seitlich einem taktweise angetriebenen Förderband zugeführt und dort über Greifer erfaßt und festgelegt,
b) über eine Leimauftragsvorrichtung wird ein Leimstreifen auf den auf dem Förderband festgelegten Beutel bzw. das flache Werkstück in dessen Bodenbereich während der taktweisen Vorschubbewegung des Förderbandes aufgetragen,
c) in einer Zettelauftragsstation wird seitlich zum Förderband jeweils ein Zettel zugeführt und auf die Leimfläche aufgelegt.

Erfindungsgemäß werden die vorgefertigten Beutel wie auch die einzelnen Zettel von der Seite her dem Förderband zugeführt, dessen Transportrichtung demzufolge quer zur Zuführrichtung der Beutel bzw. der Zettel ist.

Von besonderem Vorteil ist es, daß die zugeführten Zettel trocken sind. Dadurch werden die Vorrichtungsteile, mittels der die Zettel von einer Bahn abgetrennt bzw. auf den Beutel aufgelegt werden, nicht mit Leim verschmiert. Diese Gefahr besteht beispielsweise bei der bereits aus dem deutschen Gebrauchsmuster G 81 33 143.6 bekannten Vorrichtung zum Ankleben von Verstärkungszetteln an die Innenseite der Ränder eines Folien-Halbschlauchs zur Herstellung von Beuteln. Gemäß der dort vorbeschriebenen Lehre wird die entsprechende Verstärkungsfolienbahn über eine Klebstoffauftrageinrichtung vor dem Aufbringen auf die Halbschlauchbahn mit Klebstoff bestrichen. Nach der Lehre der vorliegenden Erfindung wird stattdessen der Klebstoff bzw. Leim durch eine als Leimauftragsvorrichtung dienende Leimdüse unmittelbar auf die Außenseite eines Beutels im Bodenbereich während der taktweisen Vorschubbewegung des Förderbandes aufgebracht.

Die Zettel können in der Zettelauftragsstation durch Schneiden einer von einer Rolle abgezogenen Bahn gebildet werden, wobei die Schnittlinie jeweils die längeren Seiten der Zettel bilden. Gerade dadurch, daß die Zettel von der Rolle quer abgetrennt werden, kann eine große Anzahl von Zetteln auf eine Rolle aufgewickelt werden. Demgegenüber war es bislang üblich, die Bahn zur Bildung der Zettel in ihrer Längsrichtung aufzuwickeln, so daß entsprechende Zettel entlang ihrer schmaleren Seite geschnitten wurden. Diese Anordnung führte zu im Durchmesser sehr großen und dafür schmalen Rollen, die aber insbesondere bezüglich des damit verbundenen Platzbedarfs Nachteile gegenüber den nunmehr erfindungsgemäß vorgesehenen Rollen aufweisen.

Mittels einer Lochstanze können Stapellöcher in die Bahn der Zettel eingestanzt werden, bevor die Bahn zur Bildung der Zettel geschnitten wird.

Besonders vorteilhaft wird die Erfindung dadurch ausgestaltet, daß die mit den Zetteln versehenen Beutel unterhalb des abgabeseitigen Endes des Förderbandes an ein mit Stapelstiften versehenes Förderband abgegeben werden.

Eine Stapelstation für mit Aufnahmelöchern versehene Beutel ist beispielsweise schon aus der US-PS 3,523,686 bekannt. Dort werden einseitig mit entsprechenden Stapellöchern versehene Beutel an ein Förderband abgegeben, das diese über entsprechende Greifer erfaßt. Nach Umlenkung der Beutel wird deren freiliegendes Ende über einen Saugzylinder angesaugt und straffgezogen. Durch entsprechende Umlenkung des Transportbandes wird der Beutel mittels seiner Stapellöcher dann auf entsprechenden Stapelstiften eines Wicketers abgelegt. Diese Stapelstation ist vergleichsweise kompliziert aufgebaut. Demgegenüber wird nach der bevorzugten Ausgestaltung der vorliegenden Erfindung der mit dem überstehenden Zettel versehene Beutel auf dem Transportband weitertransportiert und über das abgabeseitige Ende umgelenkt. Die über die Seite des Transportbandes hinausstehenden Zettel, in welchen die Stapellöcher eingestanzt sind, können dann auf die seitlich neben das Transportband versetzt angeordneten Stapelstifte abgelegt werden. Diese Stapelstifte können ebenfalls über ein taktweise vorbewegbares Förderband in ihre Aufnahmeposition gebracht werden.

Eine erfindungsgemäße Vorrichtung zur Durchführung des vorgenannten Verfahrens weist ein taktweise antreibbares Förderband zur Aufnahme der teilweise vorgefertigten Beutel bzw. flachen Werkstücke über auf diesem angeordnete Greifer auf. Auf einer Seite dieses Förderbandes sind in Förderrichtung des Förderbandes hintereinander eine Zuführstation eine Leimauftragsvorrichtung und eine Zettelauftragsstation angeordnet. Die Zettelauftragsstation weist dabei von der Zuführstation für die teilweise vorgefertigten Beutel bzw. flachen Werkstücke einen Abstand auf, der ungefähr einer Vorzugslänge des Förderbandes entspricht.

Unterhalb des Förderbandes kann ein weiteres intermittierend antreibbares Förderband mit Stapelstiften derart angeordnet sein, daß die fertigen Beutel bzw. flachen Werkstücke nach Umlenken um das ablageseitige Ende des Förderbandes auf dieses in gewünschte Stapelhöhe abgelegt werden können.

Die Zettelauftragsstation weist vorteilhaft einen Saugzylinder mit auf einzelnen mit Saugluft beaufschlagbaren Segmenten auf, die zwischen sich jeweils einen Spalt einschließen, in den ein Schneidmesser taktweise einfahren kann.

Weiterhin kann unterhalb des Obertrums des Förderbandes ein Hubelement zum taktweisen Ankleben der Zettel angeordnet sein.

Weitere Einzelheiten und Vorteile der vorliegenden Erfindung ergeben sich aus der nachfolgenden Diskussion eines bevorzugten Ausführungsbeispiels, das in der Zeichnung dargestellt ist. Dabei zeigen
- Fig. 1: eine erfindungsgemäße Vorrichtung in perspektivischer Darstellung und
- Fig. 2: einen Teil der in Fig. 1 dargestellten Vorrichtung in vergrößerter und detaillierter Darstellung.

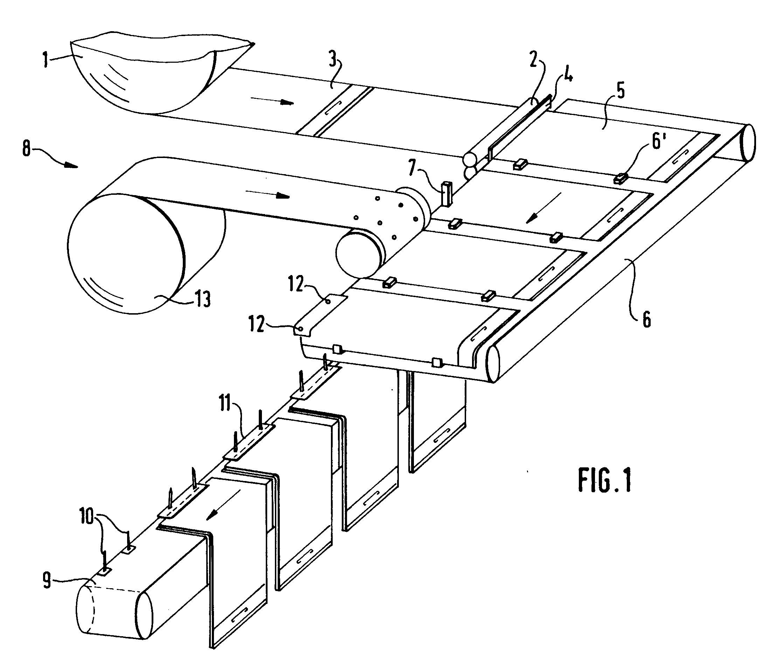

In Fig. 1 ist mit 1 eine Rolle bezeichnet, auf der eine vorgefertigte mit Seitenfalten versehene Beutelkette aufgewickelt ist. Über Vorzugswalzen 2 wird von dieser Rolle ein vorgefertigter Beutel abgezogen, der von der Beutelkette 3 durch Messer 4 abgetrennt wird. Der abgetrennte bodenseitig offene Beutel 5 ist dabei von der Seite her auf ein Förderband 6 aufgeschoben worden. Danach wird das Förderband 6 um einen Takt weiterbewegt, so daß sich der abgetrennte Beutel im Bereich der Leimdüse 7 befindet. Während eines weiteren Taktes, in dem erneut von der Rolle 1 ein Beutel abgezogen und auf das Förderband 6 abgelegt wird, gelangt der zuvor abgetrennte Beutel in den Bereich einer Zettelauftragsstation 8. Auf dem Weg dorthin wird über die Leimdüse 7 ein kurzer Leimstreifen auf eine Außenseite des Beutels 5 im bodenseitigen Bereich aufgebracht. Am abgabeseitigen Ende des Förderbandes 6 ist unterhalb dieses ein weiteres Förderband 9 vorgesehen, welches paarweise mit Stapelstiften 10 besetzt ist. Auf diese Stifte 10 werden einzelne Beutel 5 zu einem Stapel bestimmter Höhe gesammelt, wobei die Stifte 10 durch die in den Zetteln 11 vorhandenen Stapellöcher 12 hindurchgreifen.

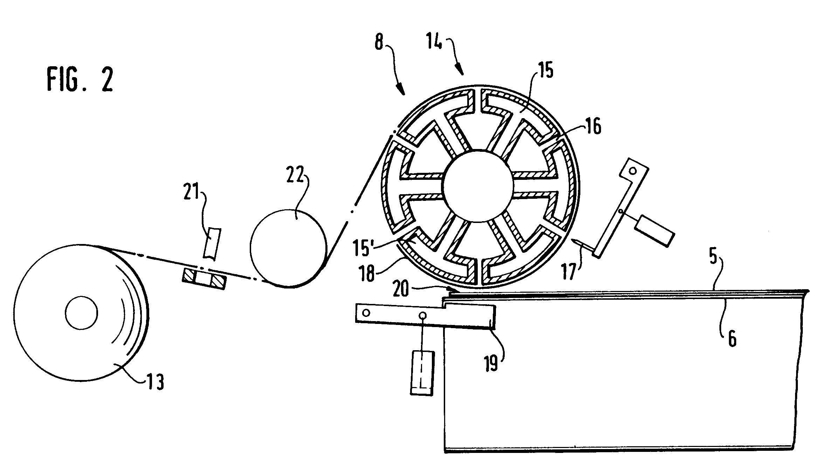

Die Zettelauftragsstation selbst ist in der Fig. 2 näher dargestellt. In dieser Figur ist eine achsparallel zur Rolle 1 angeordnete weitere Flachbahnrolle 13, von der über einen Saugzylinder 14 taktweise einzelne Zettel abgezogen werden gezeigt. Der Saugzylinder 14 ist dabei aus einzelnen mit Saugluft beaufschlagbaren Segmenten 15 gebildet, welche zwischen sich einen kleinen Spalt 16 einschließen. In diesen Spalt fährt ein Messer 17 taktweise ein, so daß von dem Saugzylinder 14 einzelne Zettel 18 abgetrennt werden können, die der Bogenlänge der Segmente 15 entsprechen.

In der Fig. 2 ist die Situation dargestellt, in der ein Zettel 18' noch von dem Segment 15' gehalten wird. Über ein unterhalb des Obertrums des Förderbandes 6 angeordnetes Hubelement 19 wird das Förderband 6 an dieser Stelle kurzzeitig angehoben, so daß der Zettel 18 mittels des Leimstreifens 20 am bodenseitigen Ende des Beutels 5 angeklebt wird. Im Moment der Absenkbewegung des Hubsegmentes 19 muß natürlich auch die Luft im Segment 15' umgesteuert werden, so daß sich der Zettel 18' vom Saugzylinder 14 löst.

In der Fig. 2 ist weiterhin schematisch eine Lochstanze 21 dargestellt, durch die die Flachbahn mit Stapellöchern versehen wird, wonach die Bahn dann über eine Umlenkwalze 22 dem eigentlichen Saugzylinder 14 zugeführt wird.

## Patentansprüche

1. Verfahren zur Herstellung von vorzugsweise mit Seitenfalten versehenen Beuteln oder anderen flachen Werkstücken, die einen über deren Begrenzung überstehenden Zettel aufweisen,
**gekennzeichnet durch folgende Schritte:**
a) teilweise vorgefertigte Beutel (5) bzw. flache Werkstücke werden seitlich einem taktweise angetriebenen Förderband (6) zugeführt und dort über Greifer (6') erfaßt und festgelegt,
b) über eine Leimauftragswalzenvorrichtung (7) wird ein Leimstreifen auf den auf dem Förderband festgelegten Beutel (5) bzw. das flache Werkstück in dessen Bodenbereich während der taktweisen Vorzugsbewegung des Förderbandes (6) aufgetragen,
c) in einer Zettelauftragsstation (8) wird seitlich zum Förderband (6) jeweils ein Zettel (18) zugeführt und auf die Leimfläche aufgelegt.

2. Verfahren nach Anspruch 1, dadurch gekennzeichnet, daß die Zettel (18) in der Zettelauftragsstation (8) durch Schneiden einer von einer Rolle (13) abgezogenen Bahn gebildet werden, wobei die Schnittlinien jeweils die längeren Seiten der Zettel (18) bilden.

3. Verfahren nach Anspruch 2, dadurch gekennzeichnet, daß mittels einer Lochstanze (21) Stapellöcher (12) in die Bahn der Zettel eingestanzt werden, bevor die Bahn zur Bildung der Zettel (18) geschnitten wird.

4. Verfahren nach einem der Ansprüche 1 bis 3, dadurch gekennzeichnet, daß die mit den Zetteln (18) versehenen Beutel (5) an ein unterhalb des abgabeseitigen Endes des Förderbandes (6) mit Stapelstiften (10) versehenes Förderband (9) abgegeben werden.

5. Vorrichtung zur Durchführung eines Verfahrens nach einem der Ansprüche 1 bis 4,
**gekennzeichnet durch:**
ein taktweise antreibbares Förderband (6) zur Aufnahme der teilweise vorgefertigten Beutel (5) bzw. flachen Werkstücke über auf diesem angeordnete Greifer (6'),
eine Zuführstation für die teilweise vorgefertigten Beutel (5) bzw. flachen Werkstücke,
eine dieser in Förderrichtung des Förderbandes (6) nachgeordnete Leimauftragsvorrichtung (7) und
eine auf diese folgende Zettelauftragsstation (8), die in einem Abstand von der Zuführstation angeordnet ist, der ungefähr einer Vorzugslänge des Förderbandes (6) entspricht.

6. Vorrichtung nach Anspruch 5, dadurch gekennzeichnet, daß unterhalb des Förderbandes (6) ein weiteres intermittierend antreibbarers Förderband (9) mit Stapelstiften (10) derart angeordnet ist, daß die fertigen Beutel bzw. flachen Werkstücke nach Umlenken um das abgabeseitige Ende des Förderbandes (6) auf dieses in gewünschter Stapelhöhe abgelegt werden können.

7. Vorrichtung nach Anspruch 6 oder 7, dadurch gekennzeichnet, daß die Zettelauftragsstation (8) einen Saugzylinder (14) mit einzelnen mit Saugluft beaufschlagbaren Segmenten (15) aufweist, die zwischen sich jeweils einen Spalt (16) einschließen, in den ein Schneidmesser (17) taktweise einfahren kann.

8. Vorrichtung nach einem der Ansprüche 5 bis 7, dadurch gekennzeichnet, daß unterhalb des Obertrums des Förderbandes (6) ein Hubelement (19) zum taktweisen Ankleben des Zettels (8) angeordnet ist.

## Claims

1. Process for producing bags, preferably provided with gussets, or other flat workpieces that contain a tab projecting beyond their limits
**characterised by the following steps:**
a) partially prefabricated bags (5) or flat workpieces are fed laterally to an intermittently driven conveyor belt (6) where they are captured and held by means of grippers (6')
b) a strip of glue is applied by a glue-applicator roller (7) to the base of the bag (5) or flat workpiece held on the conveyor belt during the intermittent feed motion of the conveyor belt (6)
c) in a tab-application unit (8) a tab (18) is advanced laterally to the conveyor belt (6) and placed on each glued surface.

2. Process as claimed in Claim 1, characterised therein that the tabs (18) are formed in the tab-application unit (8) by cutting them from a strip drawn from a roll (13) where the cut edges form the longer sides of the tabs (18) in each case.

3. Process as claimed in Claim 2, characterised therein that holes (12) to facilitate stacking are punched using a hole punch (21) before the strip is cut to form the tabs (18).

4. Process as claimed in any one of Claims 1 to 3, characterised therein that the bags (5) with attached tabs (18) are discharged onto a conveyor belt (9) with collating pins (10), where said conveyor belt (9) is located below the discharge end of the conveyor belt (6).

5. Apparatus to carry out a process as claimed in any one of Claims 1 to 4,
**characterised by:**
a conveyor belt (6) that can be intermittently driven to accommodate the partially prefabricated bags (5) or flat workpieces by means of grippers (6') located on said belt,
a feed unit for the partially prefabricated bags (5) or flat workpieces,
a glue-application device (7) located downstream of said unit in the direction of travel of the conveyor belt (6) and
a subsequent tab-application unit (8) that is located at a distance from the feed station corresponding approximately to the length of feed of the conveyor belt (6).

6. Apparatus as claimed in Claim 5, characterised therein that a further intermittently operable conveyor belt (9) with collating pins (10) is located below the conveyor belt (6) such that the finished bags or flat workpieces can be deposited to any desired stack height on said belt (9) after passing over the discharge end of the conveyor belt (6).

7. Apparatus as claimed in Claim 6 or Claim 7, characterised therein that the tab-application unit (8) incorporates a suction cylinder (14) with individual segments (15) in which a vacuum can be created and which are separated in each case by a gap (16) into which a knife (17) can be intermittently inserted.

8. Apparatus as claimed in any one of Claims 5 to 7, characterised therein that a lifting device (19) is located below the upper strand of the conveyor belt (6) to permit intermittent gluing of the tab (8).

## Revendications

1. Procédé pour la fabrication de sacs ou d'autres pièces plates présentant de préférence des plis latéraux, présentant une étiquette dépassant leur délimitation,
**caractérisé par les étapes suivantes :**
a) des sacs (5) ou des pièces plates partiellement préfabriqués sont amenés latéralement à une bande transporteuse (6) entraînée par intermittence, y sont saisis par des grappins (6') et posés fermement,
b) moyennant un dispositif à cylindre d'application de colle (7) une bande de colle est appliquée sur le sac (5) posé fermement ou la pièce plate, dans la zone du fond de ceux-ci pendant l'avancement par intermittence de la bande transporteuse,
c) dans un poste d'application de l'étiquette (8) une étiquette (18) est latéralement amenée à la bande transporteuse (6) et posée sur la surface encollée.

2. Procédé selon la revendication 1, caractérisé en ce que les étiquettes (18) sont formées au poste d'application des étiquettes (8) par la découpe d'une bande dévidée d'une bobine (13), les lignes de découpe formant chaque fois les côtés plus longs des étiquettes (18).

3. Procédé selon la revendication 2, caractérisé en ce que moyennant un poinçon (21) des trous d'empilage (12) sont percés dans la bande des étiquettes avant que la bande est coupée pour former les étiquettes (18).

4. Procédé selon l'une quelconque des revendications 1 à 3, caractérisé en ce que les sacs (5) pourvus des étiquettes (18) sont remis à une bande transporteuse (9) pourvue de pointes d'empilage (10) se trouvant au-dessous de l'extrémité côté décharge de la bande transporteuse (6).

5. Dispositif pour exécuter un procédé selon l'une quelconque des revendications 1 à 4,
**caractérisé par :**
une bande transporteuse (6) pouvant être entraînée par intermittence pour recevoir les sacs (5) ou les pièces plates partiellement préfabriqués moyennant des grappins (6') disposés sur la bande transporteuse,
un poste d'alimentation pour les sacs (5) ou pièces plates partiellement préfabriqués,
un dispositif d'application de la colle (7) se trouvant en aval de la bande transporteuse (6) en direction de la marche de celle-ci, et
un poste d'application des étiquettes (8) suivant le dispositif d'application de la colle, qui est disposé à une distance du poste d'alimentation, qui correspond environ à la longueur d'un avancement de la bande transporteuse (6).

6. Dispositif selon la revendication 5, caractérisé en ce qu'au-dessous de la bande transporteuse (6) une bande transporteuse (9) supplémentaire pouvant être entraînée par intermittence et présentant des pointes d'empilage (10) est disposée de manière à ce que les sacs ou les pièces plates terminés peuvent être déposés après avoir été retournés autour de l'extrémité de décharge de la bande transporteuse (6) sur la bande transporteuse supplémentaire en piles de hauteur souhaitée.

7. Dispositif selon la revendication 6 ou 7, caractérisé en ce que le poste d'application des étiquettes (8) présente un cylindre d'aspiration (14) avec des segments (15) individuels auxquels l'air d'aspiration est appliqué, qui renferment entre eux une fente (16) dans laquelle peut entrer par intermittence un couteau (17).

8. Dispositif selon l'une quelconque des revendications 5 à 7, caractérisé en ce qu'au-dessous du brin supérieur de la bande transporteuse (6) un élément mobile (19) est disposé pour coller par intermittence l'étiquette (8).
